(19) Europäisches Patentamt / European Patent Office / Office européen des brevets

(11) **EP 4 575 926 A1**

(12) **EUROPEAN PATENT APPLICATION**

(43) Date of publication:
**25.06.2025 Bulletin 2025/26**

(21) Application number: **24174613.0**

(22) Date of filing: **07.05.2024**

(51) International Patent Classification (IPC):
**G06N 10/60** (2022.01)    **G06N 10/20** (2022.01)

(52) Cooperative Patent Classification (CPC):
**G06N 10/60;** G06N 10/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.12.2023 EP 23220170**

(71) Applicant: **Kipu Quantum GmbH**
**76137 Karlsruhe (DE)**

(72) Inventors:
• **HEGADE, Narendra N.**
**560099 Karnataka (IN)**
• **GOMEZ CADAVID, Alejandro**
**13187 Berlin (DE)**
• **DALAL, Archismita**
**13055 Berlin (DE)**
• **SIMEN, Anton**
**13088 Berlin (DE)**
• **SOLANO, Enrique**
**10405 Berlin (DE)**

(74) Representative: **Sonnenberg Harrison Partnerschaft mbB**
**Herzogspitalstraße 10a**
**80331 München (DE)**

(54) **QUANTUM COMPUTING WITH SEQUENTIAL QUANTUM PROCESSORS THROUGH BIAS TERMS**

(57)    The invention relates to a computer-implemented method for solving a combinatorial optimization problem encoded in the ground state of an Ising spin-glass model.

**Figure 1**

## Description

The present invention relates generally to quantum computing and specifically to a method for optimizing combinatorial problems by iterative bias(anti-bias)-field application using both analog and digital quantum computation methods. In addition, the invention combines the techniques of digitized-counterdiabatic protocols inspired from quantum control with the bias field concept to obtain optimal/sub-optimal or approximate solutions for combinatorial optimization problems. Certain embodiments are defined by the appended independent and dependent claims. Certain embodiments are defined by the appended independent and dependent claims.

The invention pertains to a computer-implemented method designed to enhance solutions for complex computational problems, such as combinatorial optimization problems, quantum sampling, and other problems addressed by quantum computers, by utilizing hybrid analog and digital quantum computing techniques. In specific embodiments, this method integrates the solutions from analog quantum (or classical) devices with digital quantum computers, or vice versa, through bias terms. Here, the bias terms encode some information about the solution of the problem obtained from one hardware and serve as an input for the subsequent hardware. The subsequent hardware may either be the same device used iteratively or a different device. This integration exploits the individual capabilities of different hardware and enables the enhancement of solutions through successive iterations, utilizing the bias (anti-bias)-field derived from previous solutions to guide the computation towards better solution.

## Short Description of the invention

This summary is provided to introduce a selection of concepts in a simplified form that are further described below in the detailed description. This summary is not intended to identify key features of the invention, nor is it intended to be used to limit the scope of the invention.

The objective of the invention is to develop a technique capable of yielding optimal or near-optimal or approximate solutions for combinatorial optimization problems, utilizing both analog quantum and digital quantum computers. Additionally, the invention can be employed to enhance the solutions derived from existing classical heuristic algorithms, including but not limited to simulated annealing (SA), simulated quantum annealing (SQA), tabu search, and local search. In addition, the invention can also be used to improve the solutions obtained from classical Ising machines.

In addition, the invention develops a digital quantum computing technique called biased (anti-biased) digitized-counterdiabatic protocols, which is an iterative scheme where a bias (anti-bias)-field derived from previous solutions is utilized to guide the optimization process toward a more accurate ground state determination.

This objective is achieved by the features of the independent claims in the appended claims. Further embodiments and examples are apparent from the dependent claims, the detailed description, and the accompanying drawings of the figures.

In a first aspect, the invention refers to a computer-implemented method for solving a combinatorial optimization problem encoded in the ground state of an Ising spin-glass model.

In certain embodiments of the invention, the method comprises the steps of:

a) providing or preparing an initial Hamiltonian, whose ground state can be easily prepared. In some embodiments, he selection of the initial Hamiltonian is done by the user. However, one can also automate this by choosing some simple initial Hamiltonian whose ground state can be easily prepared. In certain embodiments, the initial Hamiltonian is provided by a user performing the method. In other embodiments, the provision of the initial Hamiltonian is automated. In particular, a simple initial Hamiltonian may be chosen whose ground state can be easily prepared.

b) Solving (evolving) the initial Hamiltonian for the ground state of the final Hamiltonian, in particular using a state-preparation method such as quantum annealing, adiabatic state preparation or counderdiabatic state preparation;

c) extracting a ground state solution from the final Hamiltonian, in particular via sampling;

d) constructing a bias(anti-bias)-field from the solution;

e) modifying the initial Hamiltonian with the bias(anti-bias)-field;

f) performing an iterative digitized-counterdiabatic quantum optimization (DCQO) on a programmable quantum computer; and

g) determining the solution to the combinatorial optimization problem based on the best outcome of the iterations.

In certain embodiments of the invention, the ground state solution of step c) above is obtained using one or more techniques selected from the group consisting of: adiabatic quantum optimization, quantum annealing, simulated annealing, simulated quantum annealing, and classical Ising Machine operations.

In certain embodiments of the invention, the programmable quantum computer utilizes one or both of standard one-qubit gates and two-qubit gates and digital-analog quantum computing techniques to perform DCQO. A standard quantum gate can be any arbitrary single qubit rotations like Rx, Ry, Rz and any static two-qubit entangling gates like CNOT, CZ and any two-qubit dynamic gates like CPHASE, cross-resonance (CR) gate or Molmer-Sorensen gate (MS).

In certain embodiments of the invention, the bias(anti-bias)-field is iteratively refined with each DCQO cycle to progressively optimize towards the ground state.

In a second aspect, the invention refers to a system for implementing the method described herein, comprising: a computational module for encoding a combinatorial optimization problem; a quantum processing unit capable of executing various annealing techniques; a sampling module for solution extraction; a bias(anti-bias)-field construction unit; and a programmable quantum computer designed to perform DCQO and iterative bias(anti-bias)-field refinement.

In a third aspect, the invention refers to a data processing apparatus/device/system comprising means for carrying out [the steps of] the method described herein.

In a fourth aspect, the invention refers to a computer program [product] comprising instructions which, when the program is executed by a computer, cause the computer to carry out [the steps of] the method described herein.

In a fifth aspect, the invention refers to a computer-readable [storage] medium comprising instructions which, when executed by a computer, cause the computer to carry out [the steps of] the method described herein.

**Detailed Description of the invention**

Combinatorial optimization problems are pervasive in scientific and engineering domains. Traditional methods such as quantum annealing have been used to solve such problems encoded in the ground state of an Ising spin-glass model. However, these methods often struggle with local minima and require extensive computational resources. The present invention addresses these challenges by iteratively refining the Hamiltonian with information from prior "solutions", improving the likelihood of ground state convergence.

A particular embodiment of the method of the invention (algorithm) is summarized in the steps given below.

Step 1: **Problem Encoding:** A combinatorial optimization problem is encoded in the ground state of an Ising spin-glass model.

Step 2: **Analog component of the algorithm:** Utilizing hardware capable of solving a ground state of an Ising spin-glass model. This can be digital classical computers with simulated annealing, simulated quantum annealing, or analog classical Ising machines or analog quantum processors.

In the next step, the analog quantum processor component is primarily described. Ways of extracting solutions from a classical computer or simulator, which will subsequently be used as input for the digital quantum computing segment, are known in the state of the art.

Step 2 (a): **input for analog quantum annealers or adiabatic quantum computers:** To solve for the ground state, we utilize adiabatic quantum optimization technique. This consist of initial Hamiltonian $H_i$, whose ground state is easily prepared, a problem Hamiltonian $H_p$ (as in step-1 encoding the solution to the combinatorial problem of interest, and a time-dependent scheduling function A(t) defining the adiabatic path.

$$H(\lambda) = (1 - \lambda)H_i + \lambda(t)\, H_p \qquad (1)$$

Here, the system evolves from the ground state of initial Hamiltonian towards the ground state of the problem Hamiltonian. The annealing time T decides the total evolution time or the run time of this algorithm.

Step 2 (b): **Solution Extraction from the analog quantum annealers or adiabatic quantum computers:** Following the evolution period T, the solution, represented as a probability distribution measured on the computational basis, is extracted from the hardware using sampling techniques.

Step 3: **Bias(anti-bias)-Field Construction:** The extracted solution is used to construct a bias(anti-bias)-field that encodes the solution information. This bias(anti-bias)-field will be used in the following step by modifying the initial Hamiltonian such that it provides a good initial starting point for the digitized-counterdiabatic protocol in the next step.

Step 4: **Digital component of the algorithm:** Utilizing programmable quantum computers based on hardware technologies including superconducting, trapped-ions, neutral atoms, photonics and spin qubits.

Step 4 (a): **Hamiltonian:** A programmable quantum computer solves the same problem Hamiltonian, modified by the sum of the initial Hamiltonian and the bias(anti-bias)-field Hamiltonian, reflecting the solution from the previous iteration. In addition, we introduce couterdiabatic terms to speed-up the evolution. The total Hamiltonian takes the form

$$H(t) = [1 - \lambda(t)](H_i + H_{bias}) + \lambda(t)H_p + \dot{\lambda}A_\lambda \qquad (2)$$

Here, $H_{bias} = \sum \tilde{h}_i^z \sigma_i^z$ , and the bias-field coefficients are obtained from the previous solution as $\tilde{h}_i^z = <\sigma_i^z>$ . And for the antibias case $H_{anti-bias} = -\sum \tilde{h}_i^z \sigma_i^z$ . The added counterdiabatic Hamiltonian is $H_{CD} = \dot{\lambda}A_\lambda$, and $A_\lambda$ is the approximate adiabatic gauge potential obtained variationally. For a large evolution time the counterdiabatic term can be neglected.

6. **Iterative Optimization:** The programmable quantum computer performs digitized-counterdiabatic quantum optimization (DCQO) using standard one and two-qubit gates or digital-analog quantum computing techniques. This process is repeated iteratively, with the bias(anti-bias)-field as in Eq. 2 updated at each iteration, until certain criteria such as the number of iterations are met.

7. **Final Solution Determination:** After completing the iterative DCQO cycles with the bias(anti-bias)-field, the method/algorithm extracts the best solution among all iterations. The best solution can be the state with minimum energy, or highest approximation ratio, or highest ground state success probability or state with highest probability.

Particular embodiments of the invention include a quantum computing environment capable of both analog and digital operations, with a dedicated module for bias(anti-bias)-field calculation and integration. A user interface provides controls for setting the initial parameters of the combinatorial optimization problem, and monitoring tools allow for real-time observation of the iterative optimization process.

The invention, a bias(anti-bias)-field iterative process, provides significant advantages over existing optimization techniques, both quantum and classical optimization techniques, including enhanced convergence rates, reduced susceptibility to local minima, and improved computational efficiency.

## Figures

The drawings of the figures show:

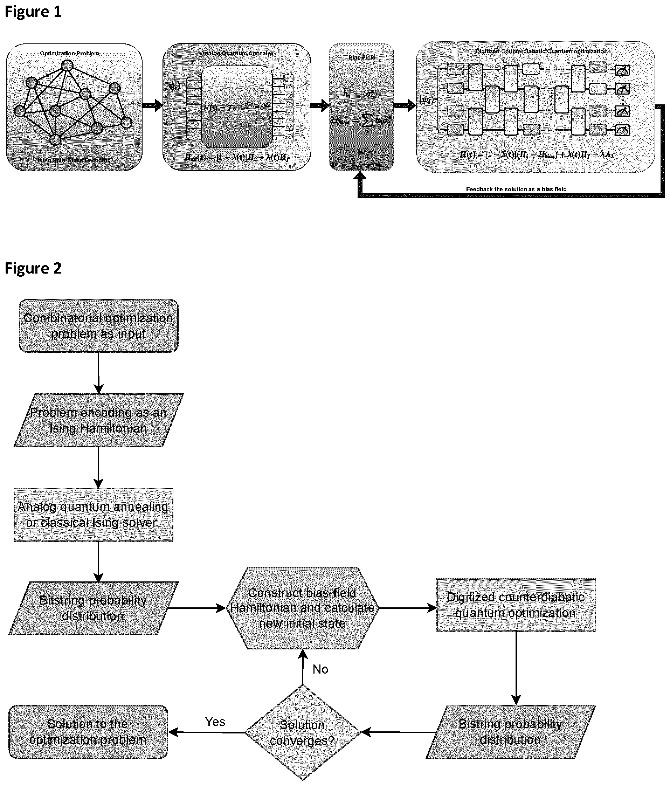

**Figure 1:** A schematic diagram showing quantum computing with sequential quantum processors consisting of analog quantum annealer followed by a digital quantum computer solving a combinatorial optimization problem. The ordering of the quantum processors can be changed depending on the need and the problem to be solved.

**Figure 2:** A flowchart describing the quantum computing with sequential quantum processor through bias field for solving combinatorial optimization problems. The ordering of the quantum processors can be arbitrary. In the figure analog quantum processor is used as an initializer for digital quantum processor implementing the DCQO protocol with bias field.

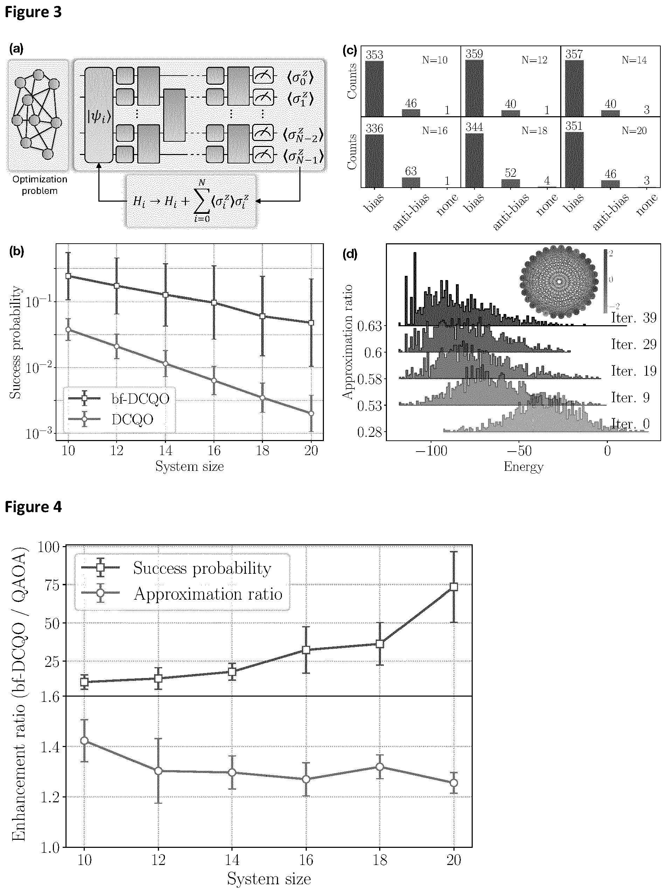

**Figure 3:** bf-DCQO for Ising spin-glass problem with long-range interaction. In (a) the schematic diagram of bf-DCQO is shown. In (b) the ground state success probability is plotted for system sizes between 10 and 20 qubits. For each system size, there are 400 randomly generated all-to-all connected spin-glass problems, which are taken from a normal distribution with mean 0 and variance 1. We show the scaling of both, bf-DCQO algorithm with 10 iterations and standard DCQO, with simulation parameters $\Delta t = 0.1$, $n_{trot} = 3$. In (c) the classification of the 400 instances using enhancement in success probability as criterion, where we count the number of instances successfully tackled by either bias or anti-bias field DCQO, and those that failed in both cases. In (d) emulation results for a randomly generated spin-glass as in previous cases. We performed 39 iterations of bf-DCQO, whose increasing approximation ratio is shown in the y-axis. For each iteration, we used $n_{trot} = 2$, $\theta_{cutoff} = 0.05$, $n_{shots} = 1000$ and IonQ forte noise model, accessed through IonQ-cloud. Furthermore, the associated all-to-all connected graph is shown.

**Figure 4:** Comparison between both simulated bf-DCQO and QAOA(p=3). The analysis is done over 10 different random spin-glass and all-to-all connected instances, with varying system size between 10 and 20 qubits. We used 20 different random initializations for QAOA and COBYLA optimizer with maximum number of iterations 300. It was contrasted to 10 iterations of bf-DCQO with $n_{trot} = 3$.

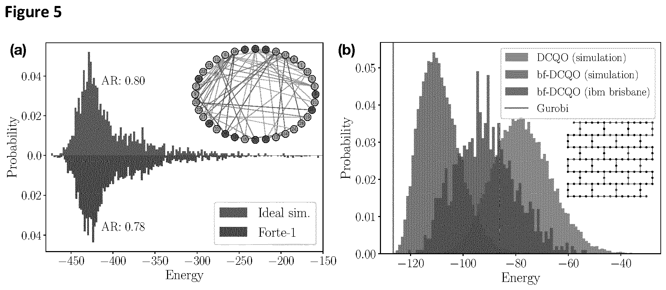

**Figure 5:** Experimental results. In (a) the ninth iteration of bf-DCQO for a randomly generated 36-node weighted MIS instance. For the simulations we used $n_{trot} = 3$, $\theta_{cutoff} = 0.012$, $n_{shots} = 1000$, whereas for the experimental case on IonQ Forte, we ran only the ninth iteration with $n_{shots} = 2500$ using debias error mitigation. The MIS size was 16 and we obtained an independent set of size 11, which can be seen in the drawn graph. In (b) the eighth iteration of bf-DCQO for a nearest-neighbor randomly generated 100 qubit spin-glass instance. For the simulations we used $n_{trot} = 2$, $\theta_{cutoff} =$

0.05 and $n_{shots}$ = 25000. For the experimental results on IBM Brisbane, we used $n_{shots}$ = 1000. Additionally, the circuit layout on the hardware is shown.

**Claims**

1.  A computer-implemented method for solving a combinatorial optimization problem, in particular encoded in the ground state of an Ising spin-glass model, comprising the steps of:

    a) providing an initial Hamiltonian;
    b) evolving or solving the initial Hamiltonian for the ground state to obtain a final Hamiltonian; Solving the initial Hamiltonian for the ground state of the final Hamiltonian, in particular using a state-preparation methods such as quantum annealing, adiabatic state preparation or counderdiabatic state preparation;
    c) extracting a ground state solution from the final Hamiltonian, in particular using sampling;
    d) constructing a bias(anti-bias)-field from the ground state solution;
    e) modifying the initial Hamiltonian with a bias(anti-bias)-field;
    f) performing an iterative digitized-counterdiabatic quantum optimization (DCQO) on a programmable quantum computer; and
    g) determining the solution to the combinatorial optimization problem based on the best outcome of the iterations.

2.  The method of claim 1, wherein the ground state solution of step c) is obtained using one or more techniques selected from the group consisting of: adiabatic quantum optimization, quantum annealing, simulated annealing, simulated quantum annealing, and classical Ising Machine operations.

3.  The method of claim 1 or 2, wherein the programmable quantum computer utilizes one or both of one- qubit gates and two-qubit gates and digital-analog quantum computing techniques to perform DCQO.

4.  The method of any of claims 1 to 3, wherein the bias(anti-bias)-field is iteratively refined with each DCQO cycle to progressively optimize towards the ground state.

5.  The method of any of claims 1 to 4, wherein the state-preparation method is selected from the group consisting of quantum annealing, adiabatic state preparation and counderdiabatic state preparation.

6.  A system for implementing the method of any of claims 1 to 5, comprising: a computational module for encoding a combinatorial optimization problem; a quantum processing unit capable of executing various annealing techniques; a sampling module for solution extraction; a bias(anti-bias)-field construction unit; and a programmable quantum computer designed to perform DCQO and iterative bias(anti-bias)-field refinement.

7.  A data processing apparatus/device/system comprising means for carrying out [the steps of] the method of any of claims 1 to 5.

8.  A computer program [product] comprising instructions which, when the program is executed by a computer, cause the computer to carry out [the steps of] the method of any of claims 1 to 5.

9.  A computer-readable [storage] medium comprising instructions which, when executed by a computer, cause the computer to carry out [the steps of] the method of any of claims 1 to 5.

**Figure 1**

**Figure 2**

**Figure 3**

**(a)**

Optimization
problem

$$H_i \rightarrow H_i + \sum_{i=0}^{N} \langle \sigma_i^z \rangle \sigma_i^z$$

$\langle \sigma_0^z \rangle$
$\langle \sigma_1^z \rangle$
$\langle \sigma_{N-2}^z \rangle$
$\langle \sigma_{N-1}^z \rangle$

$|\psi_i\rangle$

**(c)**

**(b)**

**(d)**

**Figure 4**

**Figure 5**

Europäisches
Patentamt

European
Patent Office

Office européen
des brevets

# EUROPEAN SEARCH REPORT

**Application Number**

EP 24 17 4613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHANDARANA P ET AL: "Digitized-counterdiabatic quantum approximate optimization algorithm", ARXIV.ORG, CORNELL UNIVERSITY LIBRARY, 201 OLIN LIBRARY CORNELL UNIVERSITY ITHACA, NY 14853, 4 March 2022 (2022-03-04), XP091170050, DOI: 10.1103/PHYSREVRESEARCH.4.013141 * page 1 - page 6, right-hand column, paragraph 2 * | 1-9 | INV. G06N10/60 ADD. G06N10/20 |
| A | Graß Tobias: "Quantum annealing with longitudinal bias fields", arXiv.org, 5 June 2019 (2019-06-05), XP093213541, DOI: 10.48550/arxiv.1906.02289 Retrieved from the Internet: URL:https://arxiv.org/pdf/1906.02289 [retrieved on 2024-10-09] * page 1 - page 5, left-hand column, paragraph 1 * | 1-9 | |
| A | WO 2023/126431 A1 (KIPU QUANTUM GMBH [DE]) 6 July 2023 (2023-07-06) * abstract; examples 1-14 * * page 2, paragraph 3 - page 14, paragraph 2 * | 1-9 | TECHNICAL FIELDS SEARCHED (IPC) G06N |
| T | Gomez Cadavid Alejandro ET AL: "Bias-field digitized counterdiabatic quantum optimization", , 22 May 2024 (2024-05-22), XP093213545, Retrieved from the Internet: URL:https://arxiv.org/pdf/2405.13898 [retrieved on 2024-10-09] * the whole document * | 1-9 | |

The present search report has been drawn up for all claims

| Place of search | Date of completion of the search | Examiner |
|---|---|---|
| The Hague | 10 October 2024 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 4613

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2024

| Patent document cited in search report | Publication date | Patent family member(s) | Publication date |
|---|---|---|---|
| WO 2023126431 A1 | 06-07-2023 | NONE | |